Europäisches Patentamt

European Patent Office

Office européen des brevets

(11) Veröffentlichungsnummer: **0 108 879**
**B1**

(12) **EUROPÄISCHE PATENTSCHRIFT**

(45) Veröffentlichungstag der Patentschrift:
12.08.87

(21) Anmeldenummer: 83108690.5

(22) Anmeldetag: 03.09.83

(51) Int. Cl.⁴: **B 60 R 13/04**

(54) **Fahrzeugkarosserie mit zumindest einer daran durch ein Haftmittel befestigten Zier- oder Schutzleiste.**

(30) Priorität: 12.11.82 DE 3241906

(43) Veröffentlichungstag der Anmeldung:
23.05.84 Patentblatt 84/21

(45) Bekanntmachung des Hinweises auf die Patenterteilung:
12.08.87 Patentblatt 87/33

(84) Benannte Vertragsstaaten:
DE FR GB IT SE

(56) Entgegenhaltungen:
DE-U-1 688 801
DE-U-1 776 683

(73) Patentinhaber: Gebr. Happich GmbH, Postfach 10
02 49 Clausenbrücke 1, D-5600 Wuppertal 1 (DE)

(72) Erfinder: Treber, Willi O., Allensteiner Strasse 26,
D-5600 Wuppertal 2 (DE)
Erfinder: Fritsch, Gunter, Dipl.- Ing.,
Severinghauser Strasse 12, D-5828 Ennepetal 18
(DE)

LIBER, STOCKHOLM 1987

## Beschreibung

Die Erfindung bezieht sich auf eine Fahrzeugkarosserie mit zumindest einer daran durch ein Haftmittel befestigten mehrteiligen Zier- oder Schutzleiste, die aus separat gefertigten Leistenteilen besteht, von denen der erste als auf der Karosserie befestigter Leistenkörper ausgebildet ist und eine randseitige Nut aufweist, in der ein zweiter sich auf der Karosserie abstützender Leistenkörper aus elastischem Material gehaltert ist.

Es ist üblich, die Seitenflächen und Türen von Kraftfahrzeugkarosserien mit Kunststoff-Stoß- und Zierleisten zu versehen, um auf diese Weise die Karosserien gegenüber äußeren Schlag- und Stoßeinwirkungen zu schützen. Dabei ist es bekannt, die Zier- oder Schutzleisten durch Kleben dauerhaft an der Karosserie zu befestigen und die Leisten mit Zierauflagen, wie Zierfilmen, Metallfolien u. dgl. zu versehen. Durch das Ankleben der Leisten an die Fahrzeugkarosserien werden zwar die Nachteile der früheren Befestigungsarten, bei denen die Leisten mittels in Durchbrüche der Karosserie einführbare Klipse, Schrauben, Klammern oder dgl. festgelegt wurden und bei denen es im Bereich der Durchbrüche leicht zur Rostbildung kommen konnte, vermieden, jedoch ergeben sich auch bei Karosserien mit angeklebten Leisten noch zu überwindende Probleme. Ein bei Karosserien mit angeklebten Leisten bestehendes Hauptproblem, welches durch die vorliegende Erfindung beseitigt werden soll, besteht darin, daß durch die angeklebten Leisten die oftmals erforderliche Nach- oder Reparaturlackierung erheblich erschwert bzw. nicht ohne sichtbare Lackabrißkanten an den Leistenrändern durchgeführt werden kann. Eben diesem Umstand ist es in erheblichem Maße zuzuschreiben, daß sich bis heute Karosserien mit angeklebten Leisten noch nicht in nennenswertem Umfang haben durchsetzen können.

In der DE-U- 17 76 683 ist eine für Kraftfahrzeuge, insbesondere für Omnibusse oder dergleichen bestimmte Zierleiste mit zwischen äußeren Fußstegen des Leistenkörpers und dem Karosserieblech angeordneten, an den Fußstegen gehaltenen Dichtkedern gezeigt, wobei zwischen den Fußstegen und der Stützebene von Mittelstegen des Leistenkörpers knapp der Profilhöhe der Dichtkeder entsprechende Einschubspalte vorgesehen sind, die ein Einsetzen der Dichtkeder von der Außenseite her ermöglichen. Diese Leistenausbildung bietet den Vorteil, daß die Dichtkeder nachträglich an die montierte Zierleiste angebracht oder auch ausgetauscht werden können ohne hierfür die Zierleiste demontieren zu müssen. Es erscheint allerdings nachteilig, daß die Dichtkeder nur an den Leistenlängsrändern angebracht werden können, weil sich hierdurch die Notwendigkeit ergibt, für die Leistenenden besondere Dichtungsmittel vorzusehen, oder an den Leistenenden auf die Anordnung von Dichtungskedern zu verzichten, worunter aber der optische Gesamteindruck negativ beeinflußt würde.

Der Erfindung liegt nun, ausgehend von einer Fahrzeugkarrosserie der eingangs genannten Art, die Aufgabe zugrunde, diese so zu gestalten und auszubilden, daß trotz vorhandener, unlösbar angebrachter Leisten die Möglichkeit einer Nach- oder Reparaturlackierung ohne sichtbare Lackabrißkanten sowohl an den Längskanten als auch an den Kopfenden der Leisten gegeben ist.

Dieser Aufgabe wird erfindungsgemäß dadurch gelöst, daß die Leiste aus zwei Leistenteilen besteht, von denen der zweite als den ersten Leistenkörper umfangsseitig umgebender, in sich geschlossener Rahmen aus Gummi oder einem gummielastische Eigenschaften aufweisenden Werkstoff ausgebildet ist, dessen der Rahmenöffnung benachbarter Randbereich in eine am Umfangsrand des ersten Leistenkörpers vorgesehene Umfangsnut eingreift.

Durch diese erfindungsgemäßen Maßnahmen ist es ermöglicht, die Karosserie bzw. die Leiste erst nach erfolgter Nachlackierung durch Überziehen des gummielastischen Rahmens auf den Leistenkörper zu vervollständigen und dadurch die Lackabrißkanten an den Längsrändern und Leistenenden abzudecken. Die an der Karosserie angeklebte zweiteilige Leiste ermöglicht auch eine problemlose Reparaturlackierung, wobei es lediglich erforderlich ist, den Rahmen vorübergehend vom Leistenkörper zu entfernen, um ihn nach erfolgter Reparaturlackierung wieder anzubringen.

Die Erfindung läßt sich bei Karosserien aus Blech oder Kunststoff ebenso mit Vorteil verwirklichen wie bei Leisten, deren im Sinne der Erfindung zur Halterung eines Rahmens ausgebildeter Leistenkörper aus Gummi oder Kunststoff in geblasener oder geschäumter Ausführung besteht.

Vorteilhafte Ausgestaltungen und zweckmäßige Weiterbildungen der Erfindung sind in den Unteransprüchen angegeben.

Ausführungsbeispiele der Erfindung werden nachfolgend anhand der Zeichnung näher erläutert. Es zeigen

Fig. 1 einen Karosserieabschnitt mit einer daran angeordneten Leiste,

Fig. 2 bis 5 unterschiedliche Querschnittsformen, etwa folgend der Schnittlinie A - A in Fig. 1 und

Fig. 6 bis 9 unterschiedliche Längsschnittformen, etwa folgend der Schnittlinie B - B in Fig. 1.

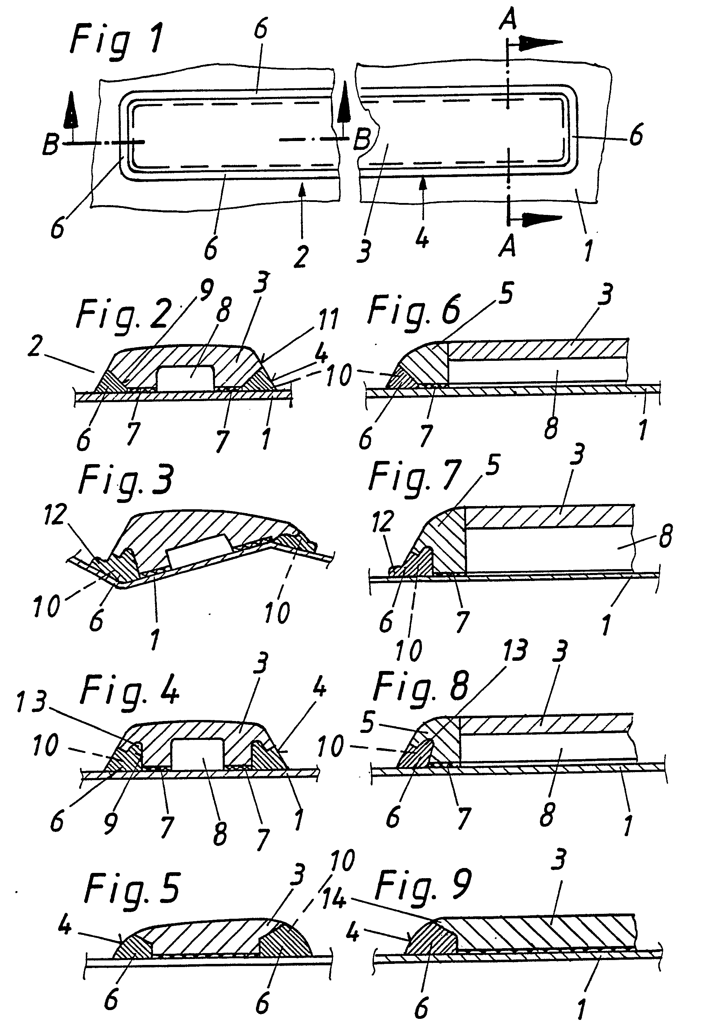

Fig. 1 zeigt einen Karosserieabschnitt 1 mit einer daran durch ein Haftmittel befestigten Leiste 2. Die Leiste 2 weist einen zweiteiligen Aufbau auf und besteht aus einem langgestreckten Leistenkörper 3 und einen den Leistenkörper 3 umfangsseitig umgebenden Rahmen 4.

Der Leistenkörper 3 kann aus jedem für eine Klebeleiste geeigneten Material bestehen und sowohl durch Strangpressen wie auch Spritzen oder durch Blasformen gebildet sein. Vorzugsweise besteht der Leistenkörper aus PVC (Polyvinylchlorid). Der Leistenkörper 3 kann zum Befestigen an der Karosserie z. B. einen druckempfindlichen Kleber tragen. Weiterhin kann der Leistenkörper 3 angespritzte, angeklebte oder sonstwie daran befestigte Endstücke 5 (vgl. Fig. 6 bis 8) tragen oder auch beschnittene Enden gemäß Fig. 9 aufweisen.

Der Rahmen 4 ist aus Gummi oder einem gummielastische Eigenschaften aufweisenden Werkstoff gebildet. Im allgemeinen besteht der Rahmen eben aus Gummi, Moosgummi, elastischem PVC oder Schaum-PVC. Der Rahmen 4 kann einstückig gespritzt sein, wie es auch möglich ist, ihn aus einzelnen Rahmenleisten 6 zusammenzusetzen, wobei die Rahmenleisten 6 an ihren Stoß- und/oder Überlappungsstellen miteinander verklebt, verschweißt oder vulkanisiert sind. Entscheidend ist, daß der Rahmen ein zusammenhängendes Gebilde ist, dessen Rahmenleisten 6 eine Längselastizität besitzen.

Fig. 2 zeigt einen Schnitt gemäß A - A nach Fig. 1, aus dem die Anordnung der Leiste 2 auf dem Karosserieabschnitt 1 deutlich zu erkennen ist. Der Leistenkörper 3 ist hier mittels eines geeigneten Klebers 7, wobei es sich auch um ein Doppelklebeband handeln kann, an der Karosserie 1 befestigt. Der Leistenkörper 3 weist auflageseitig eine von Endstück 5 bis Endstück 5 durchlaufende Nut 8 auf, die zur Gewichts- und Mateterialeinsparung und zur Verbesserung der Pufferwirkung vorgesehen ist. Die umfangsseitige umlaufende Randkante des Leistenkörpers 3 weist eine Aussparung 9 auf, die schräg nach innen verläuft und am Karosserieabschnitt 1 endet. Durch diese Aussparung 9 wird in Verbindung mit der Karosserie 1 eine Umfangsnut 10 gebildet, welche zur Aufnahme des der Rahmenöffnung benachbarten Randbereiches des Rahmens 4 dient. Daß die Umfangsnut 10 umlaufend ausgebildet ist, ergibt sich aus der Querschnittsdarstellung nach Fig. 2 in Verbindung mit dem zugehörigen Längsschnitt nach Fig. 6. Beim Ausführungsbeispiel nach Fig. 2 und 6 weist die Umfangsnut 10 eine sich von außen nach innen keilförmig verjüngende Ausbildung auf. Die Rahmenleisten 6 des einstückig oder zusammengesetzt ausgebildeten Rahmens 4 weisen in diesem Ausführungsbeispiel einen dreieckigen Querschnitt und im übrigen eine solche Gestaltung auf, daß sich zum einen eine völlige Ausfüllung der Umfangsnut 10 und zum anderen ein völlig glatter Übergang zwischen der umlaufenden Randkante 11 und der in der Einbaulage noch sichtbaren Außenfläche der Rahmenleisten 6 des Rahmens 4 ergibt. in diesem Zusammenhang soll noch darauf hingewiesen sein, daß es ohne weiteres möglich ist, wahlweise den Leistenkörper 3 und den Rahmen 4 farblich aufeinander abzustimmen oder hier einen gewollten farblichen Kontrast vorzusehen.

Der Querschnitt nach Fig. 3 verdeutlicht, daß es im Rahmen der Erfindung möglich ist, die Umfangsnut 10 durch eine entsprechend abgekantete Ausbildung der Karosserie 1 ausschließlich durch eine entsprechende Gestaltung der Karosserie 1 zu erzielen, wie dies zeichnungsrechtsseitig verdeutlicht ist oder an der Bildung der Umfangsnut 10 wesentlich beizutragen, wie dies die linke Zeichnungshälfte zeigt. Fig. 3 verdeutlicht darüber hinaus, daß der Rahmen 4 nicht notwendigerweise an jeder Stelle ein gleiches Querschnittsprofil aufweisen muß, daß es vielmehr bei vorgegebenen Einbausituationen von Vorteil sein kann, wenn die Rahmenleisten 6 ein voneinander abweichendes Querschnittsprofil besitzen.

Das Ausführungsbeispiel nach Fig. 7 entspricht im wesentlichen dem nach Fig. 6, wobei der Unterschied lediglich in der Dichtlippe 12 zu sehen ist, die der Rahmen 4 nach Fig. 7 am äußeren Randbereich aufweist.

Fig. 4 und die zugehörige Fig. 8 zeigen ein Ausführungsbeispiel, bei dem die durch die Aussparung 9 des Leistenkörpers 3 gebildete Umfangsnut 10, eine innere Hinterschneidung 13 zur noch besseren Verankerung des Rahmens 4 aufweist. Im übrigen ist bei diesem Ausführungsbeispiel die gleiche Grundgestaltung vorgesehen, wie sie anhand der Fig. 1 und 6 ausführlich erläutert wurde.

Während bei den bisher beschriebenen Ausführungsbeispielen Leistenkörper 3 mit Hohlprofilcharakter vorlagen, zeigt Fig. 5 und die dazugehörige Fig. 9 einen Leistenkörper 3 in Massivbauweise und mit beschnittenen Enden 14 anstelle von angesetzten Endstücken 5.

Bei der Montage wird zunächst der Leistenkörper 3 auf die Karosserie 1 aufgeklebt. Erst wenn sichergestellt ist, daß eine Nachlackierung beendet oder nicht erforderlich ist, wird der Rahmen 4 durch einfaches Überziehen über die umlaufende Randkante 11 des Leistenkörpers 3 angebracht und damit die Leiste 2 vervollständigt. Der Rahmen 4 ist zuverlässig in der Umfangsnut 10 gehalten, insbesondere dann, wenn er mit gewisser Vorspannung angebracht ist, und kann dennoch im Bedarfsfalle, z. B. für eine Reparaturlackierung, schnell und einfach entfernt und wieder angebracht werden.

**Patentansprüche**

1. Fahrzeugkarosserie mit zumindest einer daran durch ein Haftmittel befestigten mehrteiligen Zier- oder Schutzleiste (2), die aus separat gefertigten Leistenteilen besteht, von denen der erste als auf der Karosserie (1) befestigter Leistenkörper (3) ausgebildet ist und eine randseitige Nut aufweist, in der ein zweiter sich auf der Karosserie abstützender Leistenkörper aus elastischem Material gehalten ist, dadurch gekennzeichnet, daß die Leiste (2) aus zwei Leistenteilen besteht, von denen der zweite als den ersten Leistenkörper (3) umfangseitig umgebender, in sich geschlossener Rahmen (4) aus Gummi oder einem gummielastische Eigenschaften aufweisender Werkstoff ausgebildet ist, dessen der Rahmenöffnung benachbarter Randbereich in eine am Umfangsrand (11) des ersten Leistenkörpers (3) vorgesehene Umfangsnut (10) eingreift.

2. Fahrzeugkarosserie nach Anspruch 1, dadurch gekennzeichnet, daß die Umfangsnut (10) zwischen dem Leistenkörper (3) einerseits und der Karosserie (1) andererseits ausgebildet ist.

3. Fahrzeugkarosserie nach Anspruch 1 oder 2, dadurch gekennzeichnet, daß die Umfangsnut (10) durch eine umlaufende Aussparung (9) zwischen dem Umfangsrand (11) und der auf der Karosserie (1) aufliegenden Grundfläche des Leistenkörpers (3) und/oder durch einen in bezug auf die Grundfläche des Leistenkörpers (3) abgewinkelten Verlauf der Karosserie (1) gebildet ist.

4. Fahrzeugkarosserei nach einem oder mehreren der Ansprüche 1 bis 3, dadurch gekennzeichnet, daß die Umfangsnut (10) eine sich von außen nach innen keilförmig verjüngende Ausbildung aufweist.

5. Fahrzeugkarosserie nach einem oder mehreren der Ansprüche 1 bis 4, dadurch gekennzeichnet, daß die Umfangsnut (10) eine eine Hinterschneidung (13) bildende Erweiterung aufweist.

6. Fahrzeugkarosserie nach einem oder mehreren der Ansprüche 1 bis 5, dadurch gekennzeichnet, daß der Rahmen (4) aus Gummi, Moosgummi, Schaum-PVC oder elastischem PVC besteht.

7. Fahrzeugkarosserie nach einem oder mehreren der Ansprüche 1 bis 6, dadurch gekennzeichnet, daß der Rahmen (4) als einstückiges Spritzteil ausgebildet ist.

8. Fahrzeugkarosserie nach einem oder mehreren der Ansprüche 1 bis 6, dadurch gekennzeichnet, daß der Rahmen (4) aus einzelnen Profilleistenabschnitten zusammengesetzt ist, wobei die Endbereiche der Profilleistenabschnitte durch z. B. Kleben oder Schweißen unlösbar miteinander verbunden sind.

9. Fahrzeugkarosserie nach einem oder mehreren der Ansprüche 1 bis 8, dadurch gekennzeichnet, daß die Rahmenleisten (6) ein durchlaufend gleiches Querschnittsprofil aufweisen.

10. Fahrzeugkarosserie nach einem oder mehreren der Ansprüche 1 bis 8, dadurch gekennzeichnet, daß der Rahmen (4) Rahmenleisten (6) mit voneinander abweichendem Querschnittsprofil aufweist.

11. Fahrzeugkarosserie nach einem oder mehreren der Ansprüche 1 bis 10, dadurch gekennzeichnet, daß die der Rahmenöffnung benachbarten Randbereiche des Rahmens (4) im Querschnitt dem Öffnungsquerschnitt der Umfangsnut (10) angepaßt sind.

12. Fahrzeugkarosserie nach einem oder mehreren der Ansprüche 1 bis 11, dadurch gekennzeichnet, daß der sichtbare Umfangsrand des den Leistenkörper (3) im Bereich der Umfangsnut (10) untergreifenden Rahmens (4) sich übergangslos an den zur Karosserie hin schräg oder abgerundet abfallenden Umfangsrand (11) des Leistenkörpers (3) anschließt.

13. Fahrzeugkarosserie nach einem oder mehreren der Ansprüche 1 bis 12, dadurch gekennzeichnet, daß der Rahmen (4) im nichtmontierten entspannten Zustand sowohl in der Länge als auch in der Breite kleiner als der zugehörige Leistenkörper (3) ausgebildet ist.

## Claims

1. A vehicle body including at least one multipart trim or protection strip (2) fastened thereto by means of an adhesive and comprising separately produced strip parts, a first one of which is a strip member (3) fastened to the vehicle body (1) and having a notch extending along its edge, in which a second strip member of a resilient material is mounted in the notch and supported by the vehicle body, characterized in that the strip (2) comprises two strip parts the second one of which is a closed frame (4) - made of rubber or of a substance having the resilient characteristics of rubber - encompassing the first strip member (3) along its perimeter, and in that the frame's edge portion adjacent to its aperture engages a perimetric notch (10) provided along the perimetric edge (11) of the first strip member (3).

2. A vehicle body according to claim 1, characterized in that the perimetric notch (10) is formed between the first strip member (3), on the one hand, and the vehicle body (1), on the other hand.

3. A vehicle body according to claim 1 or claim 2, characterized in that the perimetric notch (10) is formed by a continuous cut-out (9) off and between the perimetric edge (11) of the first strip member (3) and the base thereof resting on the vehicle body (1) and/or by a vehicle body (1) section angularly bent in relation to the base of the first strip member (3).

4. A vehicle body according to any one or more of the claims 1 to 3, characterized in that the shape of the perimetric notch (10) is that of an inwardly converging wedge.

5. A vehicle body according to any one or more of the claims 1 to 4, characterized in that the perimetric notch (10) is provided with an extension forming an undercut (13).

6. A vehicle body according to any one or more of the claims 1 to 5, characterized in that the frame (4) is made of rubber, sponge rubber, a foamed PVC or a resilient PVC.

7. A vehicle body according to any one or more of the claims 1 to 6, characterized in that the frame (4) is a one-piece injection-moulded component.

8. A vehicle body according to any one or more of the claims 1 to 6, characterized in that the frame (4) is made up of a number of profiled strip sections, and in that the end portions of these sections are undetachably joined to one another by, for example, glueing or welding.

9. A vehicle body according to any one or more of the claims 1 to 8, characterized in that the cross-sectional configuration of the strips or strips sections (6) forming the frame is the same throughout.

10. A vehicle body according to any one or more of the claims 1 to 8, characterized in that the frame (4) is made of strips or strip sections (6) of different cross-sectional configuration.

11. A vehicle body according to any one or more of the claims 1 to 10, characterized in that the cross-section of the frame's (4) edge portion adjacent to its aperture matches that of the perimetric notch (10).

12. A vehicle body according to any one or more of the claims 1 to 11, characterized in that a visible perimetric end face of the frame (4), which in the region of the perimetric notch (10) extends underneath the strip member (3), is flush with and forms a continuation of the strip member's (3) perimetric end face which slopes either obliquely or roundedly to the vehicle body.

13. A vehicle body according to any one or more of the claims 1 to 12, characterized in that the frame (4) in its unmounted and thus untensioned state is smaller both in length and width than the associated strip member (3).

**Revendications**

1. Carrosserie de véhicule comportant au moins une baguette de décoration ou de protection (2) en plusieurs parties qui y est fixée au moyen d'un adhésif et comprend des parties de baguette fabriquées séparément, dont la première est réalisée sous la forme d'un corps de baguette (3) fixé à la carrosserie (1) et comporte une rainure marginale dans laquelle un second corps de baguette s'appuyant sur la carrosserie, constitué par une matière élastique, est fixé, caractérisée en ce que la baguette (2) comprend deux parties dont la seconde est réalisée sous la forme d'un cadre (4) fermé sur lui-même en caoutchouc ou en une matière présentant les propriétés d'élasticité du caoutchouc, entourant périphériquement le premier corps (3) dont la zone marginale voisine de l'ouverture du cadre s'engage dans une rainure périphérique (10) prévue au bord périphérique (11) du premier corps de baguette (3).

2. Carrosserie de véhicule selon la revendication 1, caractérisée en ce que la rainure périphérique (10) est formée entre le corps de baguette (3) d'une part et la carrosserie (1), de l'autre.

3. Carrosserie de véhicule selon la revendication 1 ou 2, caractérisée en ce que la rainure périphérique (10) est formée par un évidement périphérique (9) entre le bord périphérique (11) et la surface de base du corps de baguette (3) s'appuyant sur la carrosserie (1) et/ou par une allure pliée de la carrosserie (1) par rapport à la surface de base du corps de baguette (3).

4. Carrosserie de véhicule selon une ou plusieurs des revendications 1 à 3, caractérisée en ce que la rainure périphérique (10) présente une conformation s'amincissant en coin de l'extérieur vers l'intérieur.

5. Carrosserie de véhicule selon une ou plusieurs des revendications 1 à 4, caractérisée en ce que la rainure périphérique (10) présente un élargissement constituant une contre-dépouille (13).

6. Carrosserie de véhicule selon une ou plusieurs des revendications 1 à 5, caractérisée en ce que le cadre (4) est en caoutchouc, en caoutchouc mousse, en PVC mousse ou en PVC élastique.

7. Carrosserie de véhicule selon une ou plusieurs des revendications 1 à 6, caractérisée en ce que le cadre (4) est réalisé sous la forme d'une pièce d'un seul tenant moulé par injection.

8. Carrosserie de véhicule selon une ou plusieurs des revendications 1 à 6, caractérisée en ce que le cadre (4) se compose de sections de baguettes profilées individuelles, les zones terminales des sections de baguettes profilées étant reliées entre elles de façon inamovible, par exemple par collage ou soudage.

9. Carrosserie de véhicule selon une ou plusieurs des revendications 1 à 8, caractérisée en ce que les baguettes de cadre (6) présentent un profil de section droite toujours identique.

10. Carrosserie de véhicule selon une ou plusieurs des revendications 1 à 8, caractérisée en ce que le cadre (4) comporte des baguettes de cadre (6) à profil de section droite qui diffère de l'une à l'autre.

11. Carrosserie de véhicule selon une ou plusieurs des revendications 1 à 10, caractérisée en ce que les zones marginales du cadre (4) voisine de l'ouverture du cadre ont une section droite adaptée à la section droite d'ouverture de la rainure périphérique (10).

12. Carrosserie de véhicule selon une ou plusieurs des revendications 1 à 11, caractérisée en ce que le bord périphérique visible du cadre (4) s'engageant au-dessus du corps de baguette (3) dans la zone de la rainure périphérique (10) se raccorde sans transition au bord périphérique (11) du corps de baguette (3) qui descend obliquement ou avec un arrondi vers la carrosserie.

13. Carrosseire de véhicule selon une ou plusieurs des revendications 1 à 12, caractérisée en ce que le cadre (4) est plus petit, à l'état détendu nonmonté, que le corps de baguette (3) correspondant, tant en ce qui concerne sa longueur que sa largeur.

*Fig 1*

*Fig. 2*

*Fig. 3*

*Fig. 4*

*Fig. 5*

*Fig. 6*

*Fig. 7*

*Fig. 8*

*Fig. 9*